Europäisches Patentamt

European Patent Office

Office européen des brevets

(11) Publication number: **0 060 670**
A2

## (12) EUROPEAN PATENT APPLICATION

(21) Application number: **82301191.1**

(22) Date of filing: **09.03.82**

(51) Int. Cl.³: **B 29 C 27/16**

(30) Priority: **14.03.81 GB 8108060**

(43) Date of publication of application: **22.09.82**
Bulletin 82/38

(84) Designated Contracting States: **BE DE FR IT LU NL**

(71) Applicant: **DUNLOP LIMITED, Dunlop House Ryder Street St. James's, London SW1Y 6PX (GB)**

(72) Inventor: **Hinton, James Jones, 6 Walngate Bridge Haverigg, Millom Cumbria (GB)**

(74) Representative: **Waller, Roy Ernest Sykes et al, Group Patent Department Dunlop Limited 2 Parade, Sutton Coldfield West Midlands B72 1PF (GB)**

(54) Lining of tubular structures.

(57) A tubular structure, e.g. a tunnel or sewer, is lined by the use of a tubular lining assembly comprising an inflatable tube and curable resin material. The resin material may be light curable, in which case it may surround an inflatable tube of light transmissible material which is cured by the provision of light in the tubular lining assembly when inflated. To position the tubular lining assembly in a tubular structure use may be made of an evaginable carrier. The lining may be laid on the carrier which is then pulled into position, subjected to at least partial inflation, and then evaginated to permit removal thereof with the inflatable lining assembly remaining in the required position in the tubular structure. The lining assembly may then be inflated and cured.

1. 0060670

## LINING OF TUBULAR STRUCTURES

This invention relates to a method of and means for forming a lining in a preformed tubular structure, and in particular, though not exclusively, to the lining of tunnel-type structures such as sewers.

Many underground tunnels in the U K and overseas, and especially those used as sewers, were constructed some 80 to 150 years ago and it is now found that although the bricks used in construction of the tunnels are still in sound condition in many instances the mortar between the bricks is severely eroded.

In consequence of this erosion a tunnel's ability to withstand external ground pressure is substantially reduced and frequently a localised length of tunnel will collapse thus resulting in much inconvenience and the need for extensive and urgent repair work.

To guard against inadvertent collapse the brickwork can be re-pointed but this is a very time consuming and expensive operation, particularly for the smaller of the man entry type tunnels in which working space is very restricted.

The alternative approach of forming a new lining within the tunnel has the potential advantage of facilitating provision of a smooth surface having low fluid flow resistance, and also of reducing the requirement for extensive manual work within the restricted space of a tunnel. However, in the current known lining techniques, the lining structure is relatively expensive, or time consuming to install, or there is a requirement for extensive ground excavation at intervals along the length of the tunnel in order to facilitate maneouvring of the lining structure into the tunnel.

Furthermore, many of the currently known techniques for forming a new lining are unsuitable for the lining of tunnels which are too small to permit man entry.

The present invention seeks to provide a method of lining a tunnel in which the aforedescribed difficulties are mitigated or overcome.

In accordance with one aspect of the present invention a method of lining a tubular structure comprises:-

providing a tubular lining assembly comprising inflatable tube of light transmissible material surrounded by light curable resin material;

drawing said tubular lining assembly into the tubular structure;

effecting inflation of the tubular lining assembly, and

introducing a source of light into the inflated tubular lining assembly to effect cure of said light curable resin material.

Preferably a layer of barrier material is provided between the inflatable tube and the light curable resin material.  Subsequent to cure of the resin material the inflatable tube or both the inflatable tube and the barrier material may be removed.

It is further preferred that the tubular lining assembly is supported on a carrier whilst being drawn into the tunnel structure.  The carrier may be an elongated strip-like structure or, the carrier may be a liquid which part fills the tunnel structure such that with partial inflation the inflatable tube can be floated into position.

In accordance with another aspect of the present invention a method of lining a tubular structure comprises:-

providing a tubular lining assembly comprising an inflatable tube and curable resin material;

supporting said tubular lining assembly on an evaginable carrier;

drawing said carrier and tubular lining assembly into the tubular structure;

effecting at least partial inflation and then evagination of the carrier to permit removal thereof from the tubular structure with the tubular lining assembly remaining in the tubular structure, and

effecting inflation of the lining assembly and cure of the curable resin material.

Preferably said tubular lining assembly comprises an inflatable tube of light transmissible material surrounded by light curable resin material, cure of the lining assembly being effected by providing a light source inside the tubular assembly subsequent to inflation thereof.

In accordance with another aspect of the present invention a lining for a tubular structure comprises an inflatable tube of light transmissible material surrounded by light curable resin material. Preferably the light curable resin material is surrounded by a layer of material at least the inner surface of which provides good reflection of light.

The inflatable tube should possess sufficient strength, and if necessary be reinforced, so as to be able to withstand an inflation pressure which is sufficient to counteract the weight of the tube with the curable resin material, and a light reflective layer where provided.

The evaginable carrier may be presealed at one end, and draw means is secured to said end and extends internally along the length of the carrier to the other end thereof. Subsequent to partial inflation of the carrier said draw means facilitates evagination.

The draw means which lies internally may be attached to either end of the evaginable carrier so that the carrier may be withdrawn by evagination either in the same of opposite direction to that in which it was originally drawn into the tunnel.

Preferably two draw means are provided, which may be of similar length, and are arranged such that one extends within the carrier and the other externally.

The draw means which lies externally facilitates drawing of the carrier and inflatable tubular assembly into the tubular structure but is removed prior to evagination.

One embodiment of the invention will now be described, by way of example, with reference to the accompanying drawings in which:

Figure 1 shows in perspective an end portion of a tubular assembly and evaginable carrier in accordance with the present invention, and

Figure 2 shows the tubular assembly and carrier during evagination.

A tubular lining assembly 10 for lining a tunnel comprises, internally, an inflatable tube 11 of light transmissible material such as clear p.v.c. or clear polyethylene.  This tube has a peripheral dimension substantially the same as that of the tunnel.

The inflatable tube 11 is surrounded by a preimpregnated uncured layer 12 of resin and glass composite of a thickness and density which provides the required strength in the finished lining.  A layer of clear barrier material such as Melinex (not shown) may be provided between the tube 11 and layer 12 so as to ensure that the tube 11 does not become bonded to the resin and glass composite and may therefore be removed after cure.  Subsequently, when desired, the Melinex may also be removed.

The resin and glass composite preferably comprises isophthallic type of resin etc, a suitable pre-impregnant being chopped strand glass mat, woven glass roving, woven glass cloth or a combination thereof.

The uncured composite layer 12 is surrounded by a thin aliminium foil layer (not shown) to provide reflection of light transmitted through the layer 12.

For drawing the lining assembly 10 into a tunnel there is provided an inflatable tubular carrier 13, in the form of a slip liner, of flexible reinforced laminate material such as neoprene - nylon - neoprene.

An end 14 of the carrier is sealed and locally reinforced for attachment thereto of a tow rope 15 extending externally of the carrier and an inverting rope 16 which extends internally of the carrier.

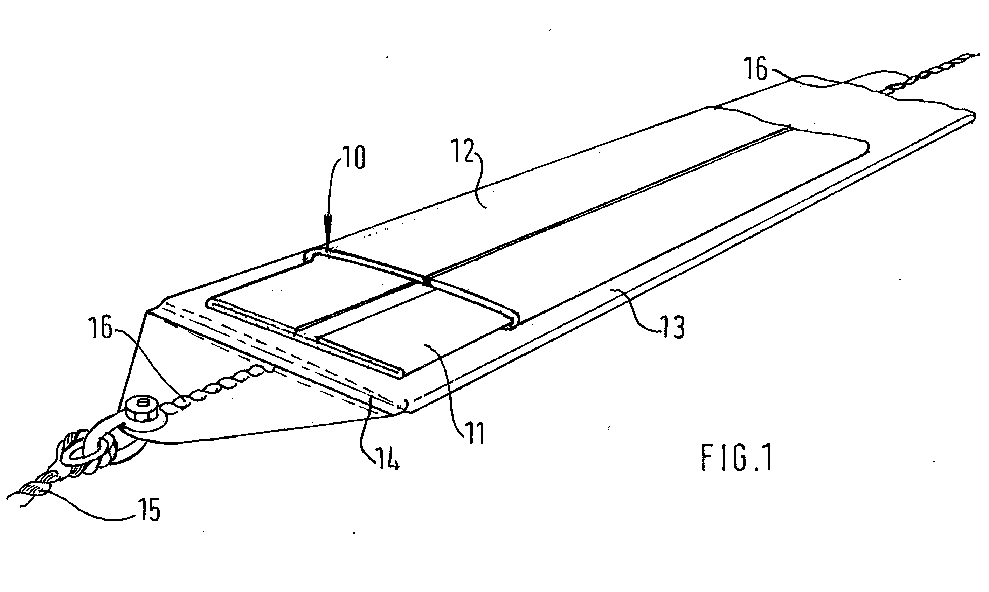

To line a tunnel the tubular lining assembly 10 is laid on the carrier 13 in the manner shown in Figure 1.

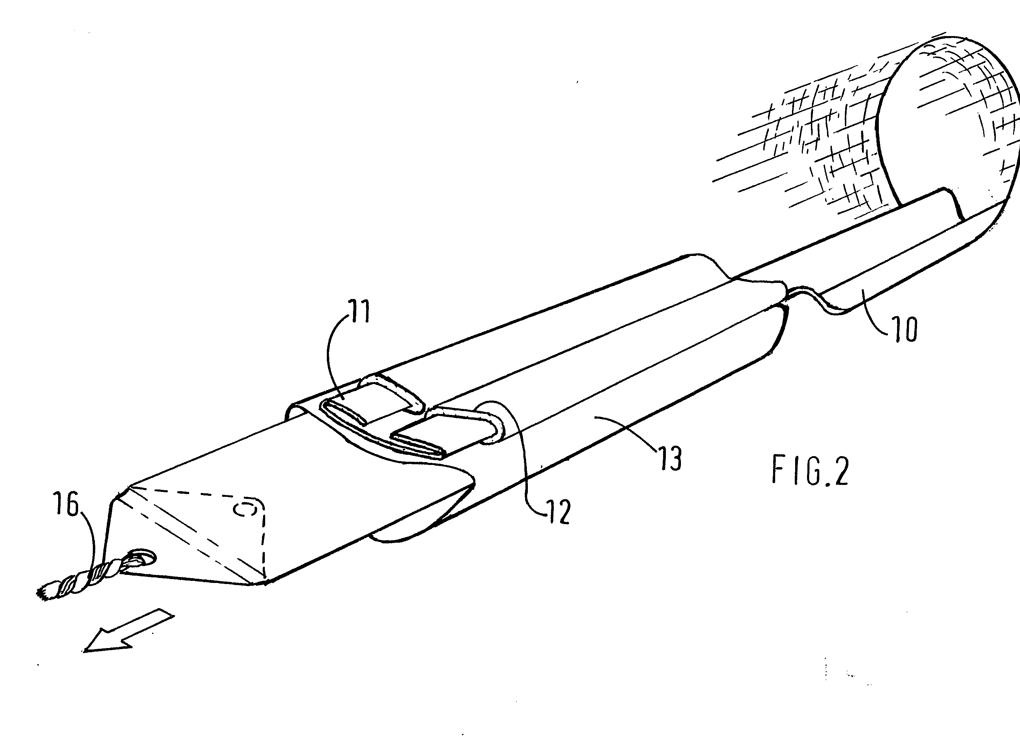

The assembly 10 is then folded longitudinally along its edges (into the configuration as shown in Figure 2) and the carrier, with the assembly 10 supported thereon is then drawn into the tunnel using the tow rope 15.

With the carrier and tubular assembly having been drawn to the required position the carrier is partially inflated with air, thus permitting the inverting rope to be pulled therethrough relatively easily and effecting evagination of the carrier. Figure 2 shows the carrier during evagination, with the tow rope having first been removed so as to avoid any risk of it rubbing against and damaging the tubular lining assembly 10.

Subsequent to evagination of the carrier the lining assembly is left on the tunnel floor and the carrier is removed from the tunnel.

The lining assembly is then inflated with air against the tunnel wall and subsequently a tungsten filament or other light source is passed along the inflated lining at a suitable rate to effect cure of the resin/glass composite.

If desired, when the lining assembly is fully cured a settable liquid grout may be introduced, e.g. by injection through suitable holes provided in the lining, so that any voids between the lining and tunnel wall may be filled and any structural deformations in the tunnel wall may be made good.

If it is desired to provide the lining in the vicinity of a tunnel junction, particularly for man entry sized tunnels, the resin/glass composite is initially only partially cured such that although self-supporting in the absence of internal air pressurisation, it can be readily cut.

After de-pressurisation the lining is cut to the required shape at the junction, and final cure then effected by further passage of the light source through the lining. Subsequently the inflatable lining tube, and optionally the Melinex, is removed.

CLAIMS:

1.     Method of lining a tubular structure characterised in that it comprises:-

providing a tubular lining assembly (10) comprising an inflatable tube (11) of light transmissible material surrounded by light curable resin material (12);

drawing said tubular lining assembly (10) into the tubular structure;

effecting inflation of the tubular lining assembly, and

introducing a source of light into the inflated tubular lining assembly (10) to effect cure of said light curable resin material (12).

2.     Method according to claim 1 characterised in that the tubular lining assembly (10) is supported on a carrier (13) whilst being drawn into the tubular structure.

3.     Method according to claim 2 characterised in that said carrier (13) is evaginable.

4.     Method according to any one of the preceding claims characterised in that a layer of barrier material is provided between the inflatable tube (11) and the light curable resin material (12) to resist adhesion between the inflatable tube and curable resin material when cured.

5.     Method according to any one of the preceding claims characterised in the the inflatable tube (11) is removed after cure of the curable resin material.

6.     Method according to claim 5 characterised in that the barrier material is removed after cure of the curable resin material.

7.     Method of lining a tubular structure characterised in that it comprises:-

providing a tubular lining assembly (10) comprising an inflatable tube (11) and curable resin material (12);

supporting said tubular lining assembly on an evaginable carrier (13);

drawing said carrier (13) and tubular assembly (10) into the tubular structure;

effecting at least partial inflation and then evagination of the carrier (13) to permit removal thereof from the tubular structure with the tubular lining assembly remaining in the tubular structure, and

effecting inflation of the tubular lining assembly and cure of the curable resin material (12).

8. Method according to claim 7 characterised in that cure of the tubular lining assembly (10) is effected by providing a light source inside said assembly subsequent to inflation thereof.

9. Method according to claim 7 or claim 8 characterised in that evagination of the carrier (13) is effected by pulling on first draw means (16) which extends along the length of the evaginalbe carrier, internally thereof.

10. Method according to any one of claims 7 to 9 characterised in that second draw means (15) is provided to facilitate pulling the support carrier (13), and tubular lining assembly (10), into the tubular structure.

11. Method according to claim 10 characterised in that said second draw means (15) is removed prior to evagination.

12. Lining for a tubular structure characterised in that it comprises an inflatable tube (11) of light transmissible material surrounded by light curable resin material (12).

13. Lining according to claim 12 characterised in that said light curable resin material (12) is surrounded by a layer of material at least the inner surface of which provides good reflection of light.

14. Lining according to claim 12 or claim 13 characterised in that a layer of barrier material is provided between the inflatable tube (11) of light transmissible material and the light curable resin material (12) to resist adhesion therebetween.

FIG.1

FIG.2